Europäisches Patentamt

European Patent Office

Office européen des brevets

(19)

(11) Veröffentlichungsnummer: **0 232 781**
**B1**

(12) **EUROPÄISCHE PATENTSCHRIFT**

(45) Veröffentlichungstag der Patentschrift:
27.09.89

(21) Anmeldenummer: 87101013.8

(22) Anmeldetag: 24.01.87

(51) Int. Cl.⁴: **F 16 B  13/06**

(54) **Spannelement zum Festlegen in einer Bohrung eines Bauteiles.**

(30) Priorität: 07.02.86  DE 3603801

(43) Veröffentlichungstag der Anmeldung:
19.08.87 Patentblatt 87/34

(45) Bekanntmachung des Hinweises auf die Patenterteilung:
27.09.89 Patentblatt 89/39

(84) Benannte Vertragsstaaten:
BE CH DE FR IT LI NL SE

(56) Entgegenhaltungen:
DE-A- 3 329 732
DE-A- 3 331 097
US-A- 4 144 796

(73) Patentinhaber: **ABB Reaktor GmbH, Dudenstrasse 44,
D-6800 Mannheim 1 (DE)**

(72) Erfinder: **Haller, Hans, Dipl.-Ing. (FH), Am
Sonnengarten 5, D-6800 Mannheim 1 (DE)**
Erfinder: **Ziegelmeyer, Fritz, Monestrasse 26,
D-7525 Bad-Schönborn (DE)**

(74) Vertreter: **Rupprecht, Klaus, Dipl.-Ing. et al, c/o BBC
Brown Boveri Aktiengesellschaft ZPT
Postfach 100351 Kallstadter Strasse 1,
D-6800 Mannheim 1 (DE)**

ACTORUM AG

**Beschreibung**

Die Erfindung betrifft ein Spannelement zum Festlegen in einer Bohrung eines Bauteiles und zum Tragen einer in Achsrichtung des Spannelementes wirkenden Last, mit einer aus mehreren Teilschalen bestehenden Spannhülse, in deren Innenraum ein Spanndorn in vertikaler Richtung bewegbar ist, wobei die Teilschalen und der Spanndorn mit zusammenwirkenden Spreizflächen ausgebildet sind und wobei einführseitig am stirnseitigen Ende des Spannelementes vorgesehene und bei einer in Achsrichtung verlaufenden Bewegung des Spanndornes wirksame Schrägflächen das Lösen der Spannhülse unterstützen.

Ein derartiges Spannelement ist aus der DE-A-3 300 460 bekannt. Dort wird die Achsialbewegung des Spanndornes mittels eines Druckluftmotors aus einer Drehbewegung umgesetzt. Die Umsetzung von der Dreh- in die Achsialbewegung unterliegt starken Verschleiß- und Reibungsverlusten. Außerdem kann eine fehlerhafte Betätigung des Druckluftmotors zum unbeabsichtigten Lösen der Spannstellung und somit zum Absturz der vom Spannelement getragenen Last führen. Bei diesem Stand der Technik ist zum Unterstützen des Lösungsvorganges ein separater Bauteil erforderlich, der außerdem zu einer unzweckmäßigen Verlängerung des Spannelementes führt.

Es ist die Aufgabe der Erfindung ein absturzsicheres Spannelement anzugeben, das ein zuverlässiges Zurückgehen der Teilschalen in ihre entspannte Stellung sicherstellt.

Gelöst wird diese Aufgabe erfindungsgemäß dadurch, daß ein Teilbereich der Teilschalen die Stirnseite des Spanndornes übergreift und daß die das Lösen der Spannhülse und der stützenden Schrägflächen an der Stirnseite des Spanndornes und an den die Stirnseite übergreifenden Teilbereich der Teilschalen ausgebildet sind.

Auf einfache Weise wird mit zwangsläufig wirkenden Mitteln und ohne Verlängerung des in ein Rohr ragenden Spannelementteiles der angestrebte Erfolg erreicht.

Gemäß einer bevorzugten Ausgestaltung weisen die Teilschalen einen Bund auf über dessen Stirnseiten die Teilschalen in einem Gehäuse gehalten sind, wobei eine Stirnseite an einen Vorsprung des Gehäuses anliegt und an der anderen Stirnseite eine Führungsplatte zur Anlage kommt, die unter Einhaltung eines Spiels zwischen dem Vorsprung und der Stirnseite des Bundes relativ zum Gehäuse festlegbar ist.

Damit wird eine sichere Haltung und eine exakte Führung der Teilschalen quer zur Achsrichtung des Spannelementes erzielt.

Zur Präzisierung der Führung ist zwischen der Führungsplatte und der daran anliegenden Stirnseite des Bundes eine das Gleiten erlaubende Nut-/Federverbindung vorgesehen.

Die auf die Teilschalen selbsttätig wirkende Spannkraft und die Aufhebung derselben wird vorzugsweise dadurch erzielt, daß zwischen einem an dem den Spreizflächen abgewandten Ende des Spanndornes vorgesehenen Widerlager und der Führungsplatte ein Tellerfederpaket angeordnet ist und daß ein Hohlkolben eines mit dem Gehäuse verbundenen Hohlkolbenzylinders an der dem Tellerfederpaket gegenüberliegenden Seite des Widerlagers anzugreifen und die Kraft des Federpaketes aufzuheben vermag.

Die Erzeugung der Spannkraft und deren Aufhebung wird also durch vollkommen getrennte Bauteile vorgenommen. Das Tellerfederpaket wirkt selbsttätig und dessen Spannkraft kann nur aufgehoben werden, wenn der Hohlkolbenzylinder aktiviert ist. Eine versehentliche Betätigung des Hohlkolbens ist unwahrscheinlich, da er nur die Funktion des Entspannens auszuführen hat.

Eine bevorzugte Ausgestaltung sieht vor, daß das Widerlager zur Einstellung der Kraft des Federpaketes relativ zum Spanndorn bewegbar ist.

Zum Schutz des Tellerfederpaketes wird vorgeschlagen, daß zwischen dem Gehäuse und dem Hohlkolbenzylinder ein Verbindungsstück vorgesehen ist, das eine Führungshülse für das Tellerfederpaket gegenüber dem Gewindering verspannt.

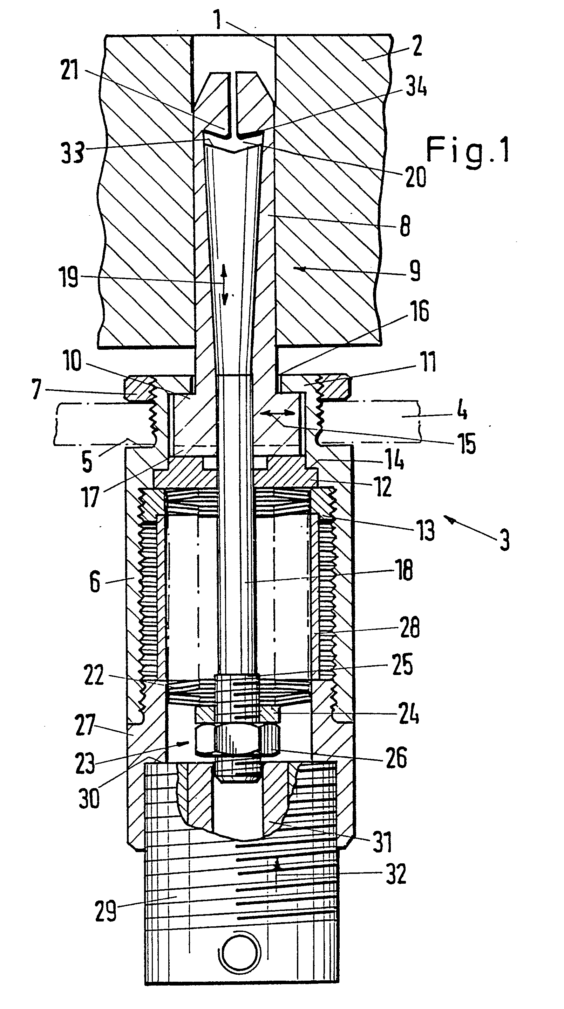

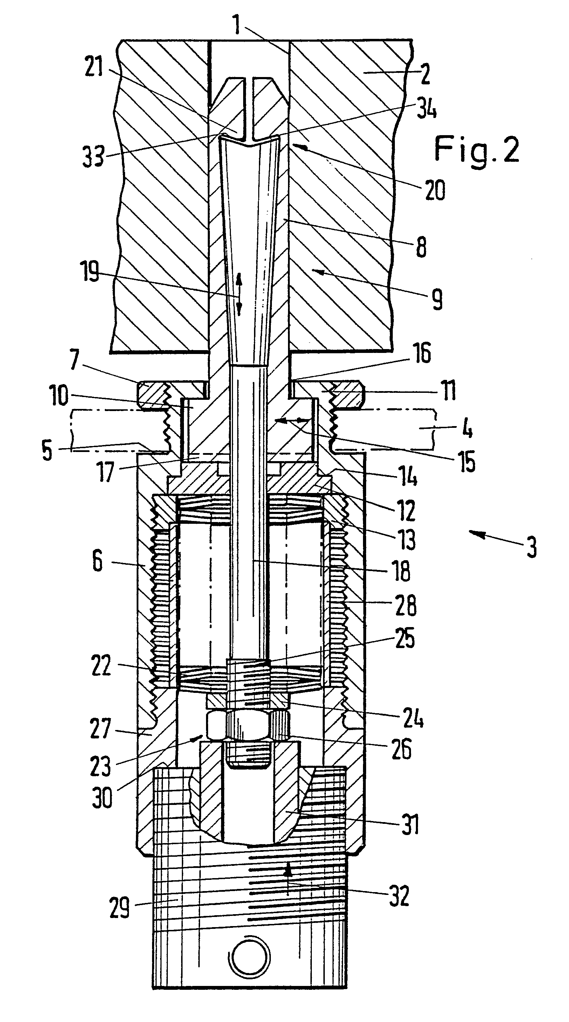

Anhand eines Ausführungsbeispieles und der Figuren 1 und 2 wird das erfindungsgemäße Spannelement beschrieben. Dabei zeigt die:

Figur 1 einen Längsschnitt durch ein in Spannstellung befindliches Spannelement und

Figur 2 einen Längsschnitt durch ein Spannelement bei aufgehobener Spannung.

Die Figur 1 zeigt eine Bohrung 1 eines Bauteiles 2 in der ein Spannelement 3 verankert ist. Das Spannelement 3 dient zum Halten einer, durch strichpunktierte Linien angedeutete Last 4 relativ zum Bauteil 2. Diese Last ist an einer Schulter 5 eines Gehäuses 6 abgestützt und durch eine Mutter 7 gesichert. Eine aus zwei als Halbschalen 8 ausgebildeten Teilschalen bestehende Spannhülse 9 weist einen Bund 10 auf, der mit seiner nach oben gerichteten Stirnseite gegen einen Vorsprung 11 des Gehäuses 6 grenzt und mit seiner nach unten gerichteten Stirnseite auf einer Führungsplatte 12 abgestützt ist. Die Führungsplatte 12 ist über einen in das Gehäuse 6 einschraubbaren Gewindering 13 gegen eine Schulter 14 des Gehäuses anlegbar. Die Dicke der Führungsplatte 12 und die Höhe des Bundes 10 sind dabei so aufeinander abgestimmt, daß zwischen dem Vorsprung 11 und der angrenzenden Stirnseite des Bundes 10 noch ein ausreichendes Spiel gegeben ist, um eine Bewegung der Halbschalen in Pfeilrichtung 15 im Rahmen des Ringspaltes 16 zwischen der Spannhülse 9 und dem Gehäusedurchtritt zu ermöglichen. Zur Gewährleistung einer exakten Führung besteht zwischen der Führungsplatte 12 und der unteren Stirnseite des Bundes 10 eine das Gleiten erlaubende Nut-/Federverbindung 17. Ein die Führungsplatte 12 durchsetzender Spanndorn 18 ragt in den Innenraum der Spannhülse 9 und ist in axialer Richtung 19 im Rahmen des Freiraumes 20 zwischen dem oberen Ende des Spanndornes 18 und dem Absatz 21 der Halbschalen 8 relativ zur Spannhülse 9 bewegbar. Zusammen mit der Spannhülse 9 ist der Spanndorn 18 nur in der in Figur 2 gezeigten entspannten Stellung bewegbar. Die komplementären Spreizflächen zwischen dem den Halbschalen 8 und dem Spreizdorn 18 sind in Richtung der Last 4 verjüngend ausgebildet. Dadurch ist es möglich, die Halbschalen 8 mit einer selbsttätig wirkenden Spannkraft zu beaufschlagen. Zur Erzeugung dieser Spannkraft dient ein Tellerfederpaket 22, das zwischen der Führungsplatte 12 und einem am freien Ende des Spanndornes 18 angreifenden Widerlager 23. Das Widerlager 23 besteht aus einer dem Tellerfederpaket zugewandten Scheibe 24 und einer auf ein Gewinde 25 des Spanndornes 18 aufgeschraubte Mutter 26. Die notwendige Spannkraft läßt sich durch Verstellung der Mutter 26 aufbringen und einstellen. Ein Zwischenstück 27 ist am unteren Ende des Gehäuses 6 eingeschraubt und stützt eine bis zum Gewindering 13 reichende Führungshülse 28, die das Tellerfederpaket umschließt. An seinem nach unten gerichteten Ende trägt das Zwischenstück 27 einen Kolbenstangenlosen Zylinder 29, der dort bis zum Anliegen an eine Schulter 30 des Zwischenstückes 27 eingeschraubt ist.

Das bereits vor seinem Einführen in die Bohrung 1 in Spannstellung befindliche Spannelement 3 wird durch Verfahren des Hohlkolbens 31 in Pfeilrichtung 32 in seine entspannte Stellung gebracht und kann in diesem Zustand in die Bohrung 1 eingeführt bzw. aus dieser entnommen werden. Bei diesem Vorgang gelang der Hohlkolben 31 an eine demselben zugewandten Stirnseite der Mutter 26 zur Anlage und verschiebt unter Überwindung der Kraft des Tellerfederpaketes 22 den Spanndorn 18 bis zur Anlage an das obere Ende des Freiraumes 21 der Halbschalen 8 der Spannhülse 9 (Figur 2). Die schräg nach innen verlaufenden etwa 15 Grad geneigten Flächen 33 am oberen Ende des Spanndornes 18 bewirken dabei nach ihrem Kontakt mit den komplementär ausgebildeten Flächen 34 des Freiraumes 21 eine zueinander gerichtete Bewegung der Halbschalen 8. Die Halbschalen 8 werden mit dieser Maßnahme zwangsläufig um einige Zehntel Millimeter auf ein Maß zusammengefahren, das ein problemloses Einbringen in die als auch Entfernen des Spannelementes aus der Bohrung 1 ermöglicht.

**Patentansprüche**

1. Spannelement zum Festlegen in einer Bohrung (1) eines Bauteiles (2) und zum Tragen einer in Achsrichtung des Spannelementes (3) wirkenden Last (4) mit einer aus mehreren Teilschalen (8) bestehenden Spannhülse (9) in deren Innenraum ein Spanndorn (18) in vertikaler Richtung bewegbar ist, wobei die Teilschalen und der Spanndorn mit zusammenwirkenden Spreizflächen ausgebildet sind und wobei einführseitig am stirnseitigen Ende des Spannelementes vorgesehene und bei einer in Achsrichtung verlaufenden Bewegung des Spanndornes wirksame Schrägflächen (33, 34) das Lösen der Spannhülse unterstützen, dadurch gekennzeichnet, daß ein Teilbereich der Teilschalen (8) die Stirnseite des Spanndornes (18) übergreift und daß die das Lösen der Spannhülse unterstützenden Schrägflächen (33, 34) an der Stirnseite des Spanndornes und an dem die Stirnseite übergreifenden Teilbereich der Teilschalen (8) ausgebildet sind.

2. Spannelement nach Anspruch 1, dadurch gekennzeichnet, daß die Teilschalen (8) einen Bund (10) aufweisen, über dessen Stirnseiten die Teilschalen in einem Gehäuse (6) gehalten sind, wobei eine Stirnseite an einem Vorsprung (11) des Gehäuses (6) anliegt und an der anderen Stirnseite eine Führungsplatte (12) zur Anlage kommt, die unter Einhaltung eines Spiel zwischen dem Vorsprung (11) und der Stirnseite des Bundes (10) relativ zum Gehäuse (6) festlegbar ist.

3. Spannelement nach Anspruch 1, dadurch gekennzeichnet, daß zwischen der Führungsplatte (12) und der daran anliegenden Stirnseite des Bundes (10) eine das Gleiten erlaubende Nut-/Federverbindung (17) vorgesehen ist.

4. Spannelement nach Anspruch 1, 2 oder 3, dadurch gekennzeichnet, daß zwischen einem an dem den Spreizflächen abgewandten Ende des Spanndornes (18) vorgesehenen Widerlager (23) und der Führungsplatte (12) ein Tellerfederpaket (22) angeordnet ist und daß ein Hohlkolben (31) eines mit dem Gehäuse (6) verbundenen Hohlkolbenzylinders (29) an der dem Tellerfederpaket (22) gegenüberliegenden Seite des Widerlagers (23) anzugreifen und die Kraft des Tellerfederpaketes (22) aufzuheben vermag.

5. Spannelement nach Anspruch 4, dadurch gekennzeichnet, daß das Widerlager (23) zum Einstellen der Kraft des Tellerfederpaketes (22) relativ zum Spanndorn (18) bewegbar ist.

6. Spannelement nach Anspruch 4 oder 5, dadurch gekennzeichnet, daß zwischen dem Gehäuse (6) und dem Hohlkolbenzylinder (29) ein Verbindungsstück (27) vorgesehen ist, das eine Führungshülse (28) für das Tellerfederpaket (22) gegenüber dem Gewindering (13) verspannt.

**Claims**

1. Clamping element for securing in a bore (1) of a component (2) and for carrying a load (4) operative in the axial direction of the clamping element (3) with a clamping sleeve (9) which consists of several part shells (8) and in the interior of which a clamping mandrel (18) is movable in the vertical direction, the part shells and the clamping mandrel being designed with interacting spreading faces, and sloping faces (33, 34), provided on the end face of the clamping element on the introduction side and taking effect during an axial movement of the clamping mandrel, assisting the release of the clamping sleeve, characterised in that a part region of the part shells (8) engages over the end face of the clamping mandrel (18), and in that the sloping faces (33, 34) assisting the release of the clamping sleeve are formed on the end face of the clamping mandrel and on the part region of the part shells (8) which engages over the end face.

2. Clamping element according to Claim 1, characterized in that the part shells (8) have a collar (10), via the end faces of which the part shells are retained in a housing (6), one end face resting against a projection (11) of the housing (6) and a guide plate (12) coming up against the other end face, which guide plate can be fixed relative to the housing (6), with a play at the same time being maintained between the projection (11) and the end face of the collar (10).

3. Clamping element according to Claim 1, characterized in that a tongue-and-groove joint (17) which allows sliding is provided between the guide plate (12) and the end face of the collar (10) resting against it.

4. Clamping element according to Claim 1, 2 or 3, characterized in that a cup-spring assembly (22) is arranged between an abutment (23) located at the end of the clamping mandrel (18) facing away from the spreading faces and the guide plate (12), and in that a hollow piston (31) of a hollow-piston cylinder (29) connected to the housing (6) can engage on the side of the abutment (23) located opposite the cup-spring assembly (22) and can cancel the force of the cup-spring assembly (22).

5. Clamping element according to Claim 4, characterized in that the abutment (23) is movable relative to the clamping mandrel (18) in order to adjust the force of the cup-spring assembly (22).

6. Clamping element according to Claim 4 or 5, characterized in that between the housing (6) and the hollowpiston cylinder (29) there is a connecting piece (27) which braces a guide sleeve (28) for the cup-spring assembly (22) relative to the threaded ring (13).

**Revendications**

1. Elément de serrage destiné à être fixé dans un trou (1) d'un élément de construction (2) et à supporter une charge (4) agissant dans la direction axiale de l'élément de serrage (3), comportant une douille de serrage (9) consistant en plusieurs coques partielles (8), à l'intérieur de laquelle un mandrin de serrage (18) est monté mobile en direction verticale, les coques partielles et le mandrin de serrage comportant des surfaces à écartement agissant conjointement et des surfaces inclinées (33, 34), prévues à l'entrée, à l'extrémité frontale de l'élément de serrage et actives lors d'un mouvement du mandrin de serrage dans la direction axiale, assistant le déblocage de la douille de serrage, caractérisé par le fait qu'une zone partielle des coques partielles (8) recouvre la face frontale du mandrin de serrage (18) et que les surfaces inclinées (33, 34) assistant le déblocage de la douille de serrage sont réalisées sur la face frontale du mandrin de serrage et sur la zone partielle des coques partielles (8) recouvrant la face frontale.

2. Elément de serrage selon la revendication 1, caractérisé par le fait que les coques partielles (8) présentent une collerette (10) par les côtés frontaux de laquelle les coques partielles sont maintenues dans un boîtier (6), l'un des côtés frontaux s'appuyant sur une saillie (11) du boîtier (6) et une plaque de guidage (12) s'appuyant sur l'autre côté frontal, plaque de guidage qui peut être fixée par rapport au boîtier (6), un jeu étant respecté entre la saillie (11) et le côté frontal de la collerette (10).

3. Elément de serrage selon la revendication 1, caractérisé par le fait qu'une liaison à rainure/languette (17) permettant le glissement est prévue entre la plaque de guidage (12) et le côté frontal de la collerette (10) qui y est adjacent.

4. Elément de serrage selon la revendication 1, 2 ou 3, caractérisé par le fait qu'un paquet de ressorts à disques (22) est disposé entre une butée (23) prévue à l'extrémité du mandrin de serrage (18) opposée aux surfaces à écartement et la plaque de guidage (12) et qu'un piston creux (31) d'un cylindre à piston creux (29) lié au boîtier (6) peut s'appliquer sur le côté de la butée (23) opposé au paquet de ressorts à disques (22) et équilibrer la force du paquet de ressorts à disques (22).

5. Elément de serrage selon la revendication 4, caractérisé par le fait que la butée (23) est mobile par rapport au mandrin de serrage (18) pour réglage de la force du paquet de ressorts à disques (22).

6. Elément de serrage selon la revendication 4 ou 5, caractérisé par le fait qu'un élément de liaison (27) est prévu entre le boîtier (6) et le cylindre de piston creux (29), élément serrant une douille de guidage (28) pour le paquet de ressorts à disques (22) contre la bague filetée (13).

Fig.1

Fig.2